# EUROPEAN PATENT APPLICATION

(11) **EP 4 406 764 A1**
(43) Date of publication of application: **31.07.2024**
(21) Application number: 22887468.1
(22) Date of filing: 18.10.2022
(51) Int. Cl.: B60K 6/383, B60K 6/24, B60K 6/36, F16D 41/00, F16D 13/70, F16D 23/06

(54) **HYBRID DRIVE MODULE**

(30) Priority: 27.10.2021 KR 20210144505
(71) Applicant: Valeo Kapec Co., Ltd., Daegu 42709 (KR)
(72) Inventor: LEE, Jin Soo, Daegu 42709 (KR)
(74) Representative: Isarpatent
(86) International application number: PCT/KR2022/015892
(87) International publication number: WO 2023/075272

(57) **Abstract**

Disclosed is a hybrid driving module. A hybrid driving module according to an embodiment of the present invention is configured to selectively transmit rotational power, which is transmitted from an engine and a motor, to a transmission and includes an internal chamber including an inlet port and an outlet port for a working fluid, a torsion damper including a torque input part rotationally fixed to the engine, and a torque output part, and a one-way clutch connected to the torque output part, in which the torsion damper and the one-way clutch are disposed in the internal chamber.

## Description

### [Technical Field]

The present invention relates to a hybrid driving module, and more particularly, to a hybrid driving module configured to transmit rotational power, which is inputted from an internal combustion engine and a motor to a transmission.

### [Background Art]

An environmentally-friendly technology of vehicles is a key technology of the future vehicle industry, and vehicle manufacturers have made a great effort to develop environmentally-friendly vehicles in order to meet regulations associated with the environment and fuel economy.

Examples of the future vehicle technology may include an electric vehicle (EV) using electrical energy, a hybrid electric vehicle (HEV), and a double-clutch transmission (DCT) with improved efficiency and convenience.

The hybrid electric vehicle is a vehicle using two or more power sources, and the two or more power sources may be combined in various ways. Typically, a gasoline or diesel engine using the existing fossil fuel and a motor/generator operated by electrical energy are combined (hybrid).

The hybrid electric vehicle is equipped with both an internal combustion engine and a motor, which may innovatively reduce the amount of emission of harmful gas and fuel consumption in comparison with general vehicles.

Regarding the hybrid electric vehicle, there has been a need to develop a driving module equipped with an engine clutch and a torque converter which are capable of implementing effective power transmission and reducing the size and the number of components in order to effectively transmit rotational power from the engine and the motor to the transmission, improve the efficiency, and maximize fuel economy.

Therefore, research and development are being consistently conducted on a hybrid driving module modularized together with a motor of a hybrid electric vehicle (HEV) while including functions of an engine clutch and a torque converter in order to efficiently combine and transmit driving power of an engine and the motor in the hybrid electric vehicle.

The above information disclosed in this Background section is only for enhancement of understanding of the background of the invention and therefore it may contain information that does not form the prior art that is already known in this country to a person of ordinary skill in the art.

### [Disclosure]

### [Technical Problem]

Accordingly, the present invention has been made in an effort to solve the above-mentioned problem, and an object of the present invention is to provide a hybrid driving module, in which a structure of an engine clutch may be changed, all constituent elements and coupling structures may be simplified to reduce manufacturing costs, the hybrid driving module may operate in accordance with a rotational speed of the engine, and a separate hydraulic line and an actuator may be excluded.

Another object of the present invention is to provide a hybrid driving module, in which an engine clutch and a torsion damper are mounted together in the interior into which a working fluid is introduced, such that the arrangement of the torsion damper connected to the engine clutch may be optimized, and an overall outer diameter and an overall axial length may be reduced.

### [Technical Solution]

In order to achieve the above-mentioned objects, a hybrid driving module according to an embodiment of the present invention is configured to selectively transmit rotational power, which is transmitted from an engine and a motor, to a transmission and includes an internal chamber including an inlet port and an outlet port for a working fluid, a torsion damper including a torque input part rotationally fixed to the engine, and a torque output part, and a one-way clutch connected to the torque output part, in which the torsion damper and the one-way clutch are disposed in the internal chamber.

In one embodiment of the present invention, the hybrid driving module may include: a pilot hub rotationally fixed to the engine; a transmission hub rotationally fixed to the transmission; and a cover part rotationally fixed to the transmission hub, in which the torque input part is rotationally fixed to the pilot hub, and in which the pilot hub, the transmission hub, and the cover part define the internal chamber.

In another embodiment of the present invention, the one-way clutch may include: a drive carrier rotationally fixed to the torque output part of the torsion damper; an inner race coupled to the drive carrier; an outer race coupled to an inner peripheral surface of the cover part; and a clutch element provided between the inner race and the outer race and configured to support the outer race so that the outer race is rotatable in one direction relative to the inner race.

In another embodiment of the present invention, the outer race and the clutch element may be fixed to the cover part by a retainer coupled to the cover part.

In another embodiment of the present invention, the torque input part may include a damper drive plate having a radially inner side rotationally fixed to the pilot hub, the torque output part may include a cover plate rotationally fixed to the drive carrier, the torsion damper may be disposed radially outside the damper drive plate and include a plurality of spring members elastically supported in a circumferential direction by the damper drive plate, and the cover plate may be elastically supported in the circumferential direction by the spring members.

In another embodiment of the present invention, one end of the cover part may be rotationally fixed to the transmission hub, and the other end of the cover part may be rotatably connected to the pilot hub.

In another embodiment of the present invention, a seal member may be mounted between the other end of the cover part and the pilot hub.

In another embodiment of the present invention, a bearing may be interposed between the clutch hub and the transmission hub, and the internal chamber may fluidly communicate with the transmission through the bearing.

In another embodiment of the present invention, a rotor of the motor may be mounted radially outside the cover part.

In another embodiment of the present invention, when the engine operates, the one-way clutch may transmit the rotational power of the engine to the transmission from a time point at which the engine begins to rotate at a rotational speed higher than a rotational speed of the motor.

A hybrid driving module according to an embodiment of the present invention is configured to selectively transmit rotational power, which is transmitted from an engine and a motor, to a transmission and includes: a torsion damper configured to attenuate vibration caused by a rotation of the engine; and a one-way clutch configured to selectively transmit an output of the torsion damper to the transmission, in which a working fluid supplied from the transmission is used to lubricate the torsion damper.

In one embodiment of the present invention, when only the motor operates, the one-way clutch may transmit the rotational power of the motor to the transmission while freely rotating, and when the engine operates, the one-way clutch may transmit the rotational power of the engine to the transmission from a time point at which the engine begins to rotate at a rotational speed higher than a rotational speed of the motor.

### [Advantageous Effects]

According to the hybrid driving module according to the embodiment of the present invention described above, it is possible to change the structure of the engine clutch, thereby simplifying the overall constituent elements and coupling structures and reducing the number of manufacturing processes and manufacturing costs.

In addition, according to the present invention, the engine clutch may freely rotate (free-wheeling) in accordance with the operation conditions of the vehicle and transmit power of the motor without applying a load to the engine, such that the hybrid driving module may drive the vehicle and perform regenerative braking.

In addition, according to the present invention, the engine clutch operates in accordance with the rotational speed of the engine, such that a separate hydraulic line and actuator may be eliminated, which may improve a degree of design freedom. Further, heat generation may be minimized, and durability and operational controllability may be improved.

In addition, according to the present invention, the engine clutch and the torsion damper are mounted together in the interior into which the working fluid is introduced, such that the arrangement of the torsion damper connected to the engine clutch may be optimized, and the overall outer diameter and the overall axial length may be reduced.

Further, according to the present invention, the working fluid is supplied to the torsion damper, such that the torsion damper may be lubricated, the performance and durability may be improved, and the overall marketability may be improved.

### [Description of Drawings]

FIG. 1 is a cross-sectional view made by cutting a hybrid driving module according to an embodiment of the present invention in an axial direction.
FIG. 2 is an enlarged view of part A in FIG. 1.

### [Mode for Invention]

Hereinafter, exemplary embodiments of the present invention will be described in detail with reference to the accompanying drawings.

The present invention is not limited to the embodiments disclosed herein, but will be variously changed and implemented in various different forms. The embodiments are provided so that the present invention will be thorough and complete, and also to provide a more complete understanding of the scope of the present invention to those of ordinary skill in the art.

Therefore, it should be understood that the present invention is not limited to the embodiments disclosed below, but the configuration of any one embodiment and the configuration of another embodiment can be substituted or added, and the present invention includes all alterations, equivalents, and alternatives that are included in the technical spirit and scope of the present invention.

In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present invention.

A part irrelevant to the description will be omitted to clearly describe the present invention, and the same or similar constituent elements will be designated by the same reference numerals throughout the specification.

The size and thickness of each component illustrated in the drawings are arbitrarily shown for ease of description, but the present invention is not necessarily limited thereto. In order to clearly describe several portions and regions, thicknesses thereof are enlarged.

In the drawings, sizes or thicknesses of constituent elements may be exaggerated, increased, or decreased for convenience of understanding, but the protection scope of the present invention should not be restrictively construed.

The terms used in the present specification are used only for the purpose of describing particular examples or embodiments and are not intended to limit the present invention. Further, singular expressions include plural expressions unless clearly described as different meanings in the context.

In the present application, the terms "comprises," "comprising," "includes," "including," "containing," "has," "having", and other variations thereof are inclusive and therefore specify the presence of features, integers, steps, operations, elements, components, and/or combinations thereof disclosed in the specification. That is, in the present application, the terms "comprises," "comprising," "includes," "including," "containing," "has," "having", and other variations thereof need to be understood as not precluding the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements.

When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present invention pertains.

The terms such as those defined in a commonly used dictionary should be interpreted as having meanings consistent with meanings in the context of related technologies and should not be interpreted as ideal or excessively formal meanings unless explicitly defined in the present application.

For the convenience, the directions in the specification are defined as follows.

A forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A circumferential direction means a direction surrounding a circumference of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in an approximately circumferential direction.

In addition, the term "unit", "means", "part", "member", or the like, which is described in the specification, means a unit of a comprehensive configuration that performs at least one function or operation.

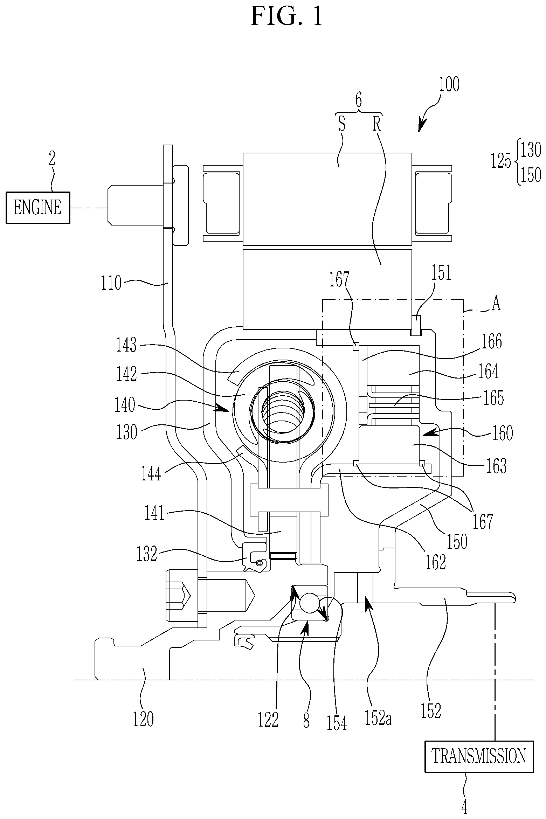

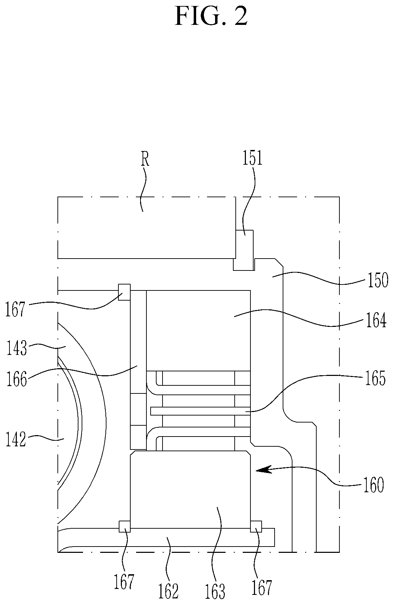

FIG. 1 is a cross-sectional view made by cutting a hybrid driving module according to an embodiment of the present invention in an axial direction, and FIG. 2 is an enlarged view of part A in FIG. 1.

FIG. 1 is a half-cross-sectional view for explaining an embodiment of the present invention and illustrates a hybrid driving module 100 according to the embodiment of the present invention.

With reference to FIG. 1, the hybrid driving module 100 according to the embodiment of the present invention serves to selectively transmit rotational power, which is transmitted from an engine 2 and a motor 6, to a transmission 4, and the hybrid driving module 100 is disposed between the engine 2 and the transmission 4.

The motor 6 may be applied to a general electric vehicle and include a rotor R and a stator S, the motor 6 may perform both functions of a motor and a generator.

In this case, the hybrid driving module 100 according to the embodiment of the present invention may include a drive plate 110, a pilot hub 120, a cover part 125, a torsion damper 140, a transmission hub 152, and a one-way clutch 160.

In this case, the pilot hub 120, the cover part 125, and the transmission hub 152 may be coupled to one another and define an internal chamber. The torsion damper 140 and the one-way clutch 160 may be disposed in the internal chamber formed as described above.

The internal chamber may have an inlet port into which a working fluid is introduced, and an outlet port. In the present embodiment, the outlet port may be formed in the transmission hub 152, and the inlet port may be formed between the pilot hub 120 and the transmission hub. This configuration will be specifically described below.

First, the drive plate 110 is connected to the engine 2, and rotational power of the engine 2 may be inputted to the drive plate 110.

The pilot hub 120 is provided is provided radially inside the drive plate 110 and disposed at a rotation center. The pilot hub 120 is mounted on the drive plate 110 by bolting.

In the present embodiment, one end of the cover part 125 may be rotationally fixed to the transmission hub 152, and the other end of the cover part 125 may be rotatably connected to the pilot hub 120.

In the illustrated embodiment, the cover part 125 may include a damper cover 130 positioned at a side of the torsion damper 140, and a clutch cover 150 positioned at a side of the one-way clutch 160.

In this case, one end of the clutch cover 150 may be rotationally fixed to the transmission hub 152.

In addition, one end of the damper cover 130 may be rotationally fixed to the other end of the clutch cover 150. Further, the other end of the damper cover 130 may be rotatably mounted on the pilot hub 120 at the side of the engine 2.

In this case, a seal member 132 may be mounted on an inner peripheral surface of the damper cover 130 to seal the damper cover 130 and the pilot hub 120.

The seal member 132 may be disposed between the pilot hub 120 and the damper cover 130 and prevent the working fluid from leaking to the outside.

Meanwhile, the torsion damper 140 is disposed at the side of the engine 2 and disposed in the damper cover 130 and the clutch cover 150 coupled to each other. The torsion damper 140 is fixed to the pilot hub 120 so that the torsion damper 140 rotates together with the pilot hub 120.

In this case, the torsion damper 140 may include a torque input part rotationally fixed to the engine 2, and a torque output part configured to output rotational power.

The torsion damper 140 serves to absorb a torsional force applied in a rotation direction of a shaft by rotational power of the engine 2 transmitted to the torque input part through the drive plate 110 and serves to attenuate vibration.

In this case, the torsion damper 140 may include a damper drive plate 141, spring members 142, a first cover plate 143, and a second cover plate 144.

First, the damper drive plate 141 is coupled to the pilot hub 120. The torque input part may be rotationally fixed to the pilot hub 120. That is, the torque input part of the torsion damper 140 may be the damper drive plate 141.

Therefore, the damper drive plate 141 may receive the torsional force and vibration applied in the rotation direction of the shaft by the rotational power of the engine 2.

The plurality of spring members 142 is disposed in a circumferential direction based on the rotation center and elastically supported by the damper drive plate 141. The spring 32 may be configured as a compression coil spring.

In the present embodiment, the first cover plate 143 and the second cover plate 144 may be disposed to surround the spring member 142 and elastically support the spring member 142.

In this case, the first cover plate 143 and the second cover plate 144 may be disposed to face each other. In addition, the first cover plate 143 may be the torque output part of the torsion damper 140.

That is, the driving power transmitted to the damper drive plate 141 may be transmitted to the first and second cover plates 143 and 144 through the spring 24. In this process, the spring member 142 may absorb vibration and impact in the rotation direction.

The torsion damper 140, which is configured as described above, may be disposed in the damper cover 130 and disposed at the side of the engine 2 based on an axial direction. The torsion damper 140 may be coupled to the pilot hub 120 and efficiently absorb the torsional force and vibration applied in the rotation direction of the shaft by the rotational power of the engine 2.

The torsion damper 140 may be lubricated by the working fluid introduced into the damper cover 130 and the clutch cover 150 coupled to each other, such that friction caused by contact between the components may be reduced, and a degree of fatigue of the spring member 142 may be reduced, which may improve overall durability.

Meanwhile, the rotor R may be fixed to the damper cover 130 or the clutch cover 150 by a fixing means mounted radially outside the damper cover 130 or the clutch cover 150. In the embodiment of the present invention, the fixing means includes a fixing ring 151 mounted on the clutch cover 150.

Therefore, the rotor R may be disposed radially outside the damper cover 130 and the clutch cover 150 assembled to each other. The rotor R is fixed by the fixing ring 151 in a state in which an inner peripheral surface of the rotor R is seated on outer peripheral surfaces of the damper cover 130 and the clutch cover 150.

In this case, the stator S is disposed radially outside the rotor R.

Meanwhile, in the present embodiment, one embodiment is described in which the fixing ring 151 is mounted on the clutch cover 150. However, the present invention is not limited thereto. The fixing ring 151 may be mounted on the outer peripheral surface of the damper cover 130.

In the present embodiment, the transmission hub 152 is rotatably connected to the pilot hub 120. An inner peripheral surface of the clutch cover 150 may be fixed to the transmission hub 152 by welding or the like.

Meanwhile, with reference to FIG. 1, a bearing 8 is interposed between the pilot hub 120 and the transmission hub 152.

In this case, one end of the bearing 8, which is directed toward the engine 2 in the axial direction, is supported in a first stepped groove 122 formed radially inward in an inner peripheral surface of the pilot hub 120.

The other end of the bearing 8, which is directed toward the transmission 2 in the axial direction, may be supported in a second stepped groove 154 formed radially inward in an outer peripheral surface of the transmission hub 152.

Therefore, the bearing 8 may be disposed between the pilot hub 120 and the transmission hub 152, and the first and second stepped grooves 122 and 154 may prevent the bearing 8 from being withdrawn in the axial direction. The bearing 8 may stably support the transmission hub 152 so that the transmission hub 152 is rotatable relative to the pilot hub 120.

In addition, the internal chamber may be fluidly connected to and communicate with the transmission 4 through the bearing 8.

In the present embodiment, as illustrated in FIGS. 1 to 2, the one-way clutch 160 is disposed at the side of the transmission 4 and disposed in the damper cover 130 and the clutch cover 150 coupled to each other. The one-way clutch 160 is connected to torque output part of the torsion damper 140.

The one-way clutch 160 may connect the drive plate 110 directly to the clutch cover 150 and selectively transmit the rotational power of the engine 2 to the transmission hub 152 through the clutch cover 150.

The one-way clutch 160 may transmit the rotational power of the engine 2 to the transmission 4 when the engine 2 operates.

In this case, when the engine 2 operates, the one-way clutch 160 may transmit the rotational power of the engine 2 to the transmission 4 from a time point at which the engine 2 begins to rotate at a rotational speed higher than a rotational speed of the motor 6.

In addition, when only the motor 6 operates, the one-way clutch 160 may transmit the rotational power of the motor 6 to the transmission 4 while freely rotating. The one-way clutch 160, which is configured as described above, may be configured as a one-way clutch.

In the embodiment of the present invention, the one-way clutch 160 may include a drive carrier 162, an inner race 163, an outer race 164, and a clutch element 165.

First, the drive carrier 162 may be rotationally fixed to the first cover plate 143 that is the torque output part of the torsion damper 140. In this case, the drive carrier 162 may be fixedly coupled to the torsion damper 140 by riveting.

The inner race 163 may be coupled to an outer peripheral surface of the drive carrier 162.

In this case, the inner race 163 may be fixedly coupled to the drive carrier 162 by a snap ring 167 mounted on the outer peripheral surface of the drive carrier 162.

In the present embodiment, the outer race 164 may be disposed at a position spaced apart radially outward from the inner race 163. The outer race 164 may be coupled to the inner peripheral surface of the clutch cover 150.

That is, the outer race 164 may be disposed at the side of the transmission 4 based on the axial direction and fixed to the inner peripheral surface of the clutch cover 150.

Further, the clutch element 165 may be provided between the inner race 163 and the outer race 164. The clutch element 165 may support the outer race 164 so that the outer race 164 is rotatable in one direction relative to the inner race 160.

In this case, the outer race 164 and the clutch element 165 may be fixed to the inner peripheral surface of the clutch cover 150 by a retainer 166 coupled to the clutch cover 150.

That is, the retainer 166 may support and fix the outer race 164 and two opposite axial sides of the clutch element 165 together with the clutch cover 150. The retainer 166 may be fixed to the clutch cover 150 by the snap ring 167 mounted on the inner peripheral surface of the clutch cover 150.

In the one-way clutch 160 configured as described above, when the rotational power of the engine 2 is transmitted by the drive carrier 162, the inner race 163 may transmit the rotational power of the engine 2 to the transmission 4 through the transmission hub 152 while rotating together with the outer race 164 in the same direction as the outer race 164.

That is, when only the motor operates, the outer race 164 of the one-way clutch 160 may transmit the rotational power of the motor 6 to the transmission 4 while being rotated freely relative to the inner race 163 by the clutch element 165.

In contrast, when the engine 2 operates, the one-way clutch 160 may transmit the rotational power of the engine 2 directly to the transmission 4 from a time point at which the engine 2 begins to rotate at a rotational speed higher than a rotational speed of the motor while the inner race 163 and the outer race 164 are rotated together in the same direction by the clutch element 165.

Meanwhile, in the hybrid driving module 100 according to the embodiment of the present invention, the working fluid passes through the bearing 8 between the pilot hub 120 and the transmission hub 152, flows in the internal chamber defined by the damper cover 130 and the clutch cover 150 coupled to each other, and then circulates to the transmission 4 through an outlet port 152a formed in the transmission hub 152.

In addition, the working fluid in the internal chamber may flow to the bearing 8 from the internal chamber as internal pressure is adjusted.

That is, the working fluid, which is introduced into the internal chamber defined by the damper cover 130 and the clutch cover 150, is supplied to the torsion damper 140 and the one-way clutch 160, flows through the bearing 8 while lubricating the torsion damper 140 and cooling the one-way clutch 160, which may contribute to lubricating the bearing 8.

Meanwhile, although not illustrated in the drawings, the transmission hub 152 may be connected to the transmission 4 through a torque converter or a fluid coupler.

Therefore, the application of the hybrid driving module 100 according to the embodiment of the present invention configured as described above may change the structure of the one-way clutch 160, thereby simplifying the overall constituent elements and coupling structures and reducing the number of manufacturing processes and manufacturing costs.

In addition, according to the hybrid driving module 100, the one-way clutch 160 freely rotates (free-wheeling) in accordance with the operation conditions of the vehicle and transmits power of the motor 6 without applying a load to the engine 2, such that the hybrid driving module 100 may drive the vehicle and perform regenerative braking.

In addition, according to the present invention, the one-way clutch 160 operates in accordance with the rotational speed of the engine 2, such that a separate hydraulic line and actuator may be eliminated, which may improve a degree of design freedom. Further, heat generation may be minimized, and durability and operational controllability may be improved.

In addition, according to the present invention, the one-way clutch 160 and the torsion damper 140 are mounted together in the internal chamber defined by the damper cover 130 and the clutch cover 150 assembled to each other, which may optimize the arrangement of the torsion damper 140 connected to the one-way clutch 160 and reduce the overall outer diameter and overall axial length.

In addition, according to the present invention, the working fluid is supplied to the torsion damper 140 provided in the internal chamber, such that the torsion damper 140 may be lubricated, the performance and durability may be improved, and the overall marketability may be improved.

The present invention has been described with reference to the limited exemplary embodiments and the drawings, but the present invention is not limited thereto. The described exemplary embodiments may be variously changed or modified by those skilled in the art to which the present invention pertains within the technical spirit of the present invention and within the scope equivalent to the appended claims.

Further, even though the operational effects of the configurations of the present invention have not been explicitly disclosed and described in the description of the embodiment of the present invention, the effects, which can be expected by the corresponding configurations, should, of course, be acceptable.

## Claims

1. A hybrid driving module, which is configured to selectively transmit rotational power, which is transmitted from an engine and a motor, to a transmission, the hybrid driving module comprising:
an internal chamber including an inlet port and an outlet port for a working fluid;
a torsion damper including a torque input part rotationally fixed to the engine, and a torque output part; and
a one-way clutch connected to the torque output part,
wherein the torsion damper and the one-way clutch are disposed in the internal chamber.

2. The hybrid driving module of claim 1, comprising:
a pilot hub rotationally fixed to the engine;
a transmission hub rotationally fixed to the transmission; and
a cover part rotationally fixed to the transmission hub,
wherein the torque input part is rotationally fixed to the pilot hub, and
wherein the pilot hub, the transmission hub, and the cover part define the internal chamber.

3. The hybrid driving module of claim 2, wherein the one-way clutch comprises:
a drive carrier rotationally fixed to the torque output part of the torsion damper;
an inner race coupled to the drive carrier;
an outer race coupled to an inner peripheral surface of the cover part; and
a clutch element provided between the inner race and the outer race and configured to support the outer race so that the outer race is rotatable in one direction relative to the inner race.

4. The hybrid driving module of claim 3, wherein the outer race and the clutch element are fixed to the cover part by a retainer coupled to the cover part.

5. The hybrid driving module of claim 3, wherein the torque input part comprises a damper drive plate having a radially inner side rotationally fixed to the pilot hub,
wherein the torque output part comprises a cover plate rotationally fixed to the drive carrier,
wherein the torsion damper is disposed radially outside the damper drive plate and comprises a plurality of spring members elastically supported in a circumferential direction by the damper drive plate, and
wherein the cover plate is elastically supported in the circumferential direction by the spring members.

6. The hybrid driving module of claim 2, wherein one end of the cover part is rotationally fixed to the transmission hub, and the other end of the cover part is rotatably connected to the pilot hub.

7. The hybrid driving module of claim 6, wherein a seal member is mounted between the other end of the cover part and the pilot hub.

8. The hybrid driving module of claim 2, wherein a bearing is interposed between the pilot hub and the transmission hub, and the internal chamber fluidly communicates with the transmission through the bearing.

9. The hybrid driving module of claim 2, wherein a rotor of the motor is mounted radially outside the cover part.

10. The hybrid driving module of claim 1, wherein when the engine operates, the one-way clutch transmits the rotational power of the engine to the transmission from a time point at which the engine begins to rotate at a rotational speed higher than a rotational speed of the motor.

11. A hybrid driving module, which is configured to selectively transmit rotational power, which is transmitted from an engine and a motor, to a transmission, the hybrid driving module comprising:
a torsion damper configured to attenuate vibration caused by a rotation of the engine; and
a one-way clutch configured to selectively transmit an output of the torsion damper to the transmission,
wherein a working fluid supplied from the transmission is used to lubricate the torsion damper.

12. The hybrid driving module of claim 11, wherein when only the motor operates, the engine clutch transmits the rotational power of the motor to the transmission while freely rotating, and
wherein when the engine operates, the engine clutch transmits the rotational power of the engine to the transmission from a time point at which the engine begins to rotate at a rotational speed higher than a rotational speed of the motor.
